# EUROPÄISCHE PATENTSCHRIFT

(11) **EP 0 936 035 B1**
(45) Veröffentlichungstag und Bekanntmachung des Hinweises auf die Patenterteilung: **11.07.2001**
(21) Anmeldenummer: 98123790.2
(22) Anmeldetag: 15.12.1998
(51) Int. Cl.: B26D 7/26

(54) **Verfahren zum Justieren eines Messers beim Messerwechsel sowie Schneidemaschine mit Messerwechselvorrichtung**
Method for adjusting the position of a blade when the blade is changed, and machine equipped with means for changing the blade
Méthode pour régler la position d'une lame lors du changement de lame, ainsi qu'une machine équipée de moyens pour changer de lame

(30) Priorität: 06.02.1998 DE 19804667
(43) Veröffentlichungstag der Anmeldung: 18.08.1999
(73) Patentinhaber: Adolf Mohr Maschinenfabrik GmbH & Co. KG, D-65719 Hofheim am Taunus (DE)
(72) Erfinder: Gross, Helmut, 65719 Hofheim/Taunus (DE); Rasch, Adolf, 65207 Wiesbaden (DE)
(74) Vertreter: Quermann, Helmut, Dipl.-Ing.

(56) Entgegenhaltungen:
- DE-A- 2 039 128
- US-A- 3 315 368

## Beschreibung

Die Erfindung bezieht sich zunächst auf ein Verfahren zum Justieren eines Messers in der abgesenkten Stellung beim Messerwechsel an einer Maschine zum Schneiden von Papier, Pappe und dergleichen. Bei diesem Verfahren wird das Messer an einem heb- und senkbaren Messerträger lösbar befestigt, wobei das vom Messerträger gelöste Messer im Messerträger heb- und senkbar gehalten ist und bei abgesenktem Messerträger das Messer zum Justieren des Messers auf mindestens ein in der Auflageebene des Schneidgutes angeordnetes Stützteil absenkbar ist. Die bei diesem Verfahren Verwendung findende Maschine weist einen Schneidtisch mit Schneidleiste auf.

Schneidmaschinen der in Rede stehenden Art sind zahlreich bekannt. Sie weisen ein Maschinengestell auf, in dem ein Messerträger mit daran befestigtem Messer zum Zwecke des Schneidens absenkbar und.zum Verfahren in die Ausgangsposition anhebbar ist. Die Messerbewegung beim Schneiden erfolgt in der Regel im Schwingschnitt, das heißt das Messer bewegt sich gleichzeitig nach unten und zur Seite, wobei es zusätzlich noch eine Schwenkbewegung ausführt, so daß die Schneidkante des Messers erst am Ende des Arbeitshubes parallel und zur Anlage auf einem flachen Gegenstück des Schneidtisches kommt. Bei diesem Gegenstück handelt es sich in aller Regel um eine in den Schneidtisch eingesetzte Schneidleiste aus Kunststoff, beispielsweise PVC oder Polypropylen, in die das Messer im unteren Totpunkt mehr oder weniger eindringt, um zu gewährleisten, daß auch die unteren Blätter des Blattstapels vollständig durchtrennt werden.

Es ist bekannt, die Voreinstellung des Messers beim Messerwechsel durch Aufsetzen des Messers auf die Schneidleiste herbeizuführen. Die Detailverstellung des Messers beim Messerwechsel erfolgt in aller Regel über Exzenter in den Drehpunkten des Messerträgers oder über eine zentrale Tiefenverstellung des im Antriebsstrang des Messerträgers befindlichen Pleuels. Das Ausrichten des Messers an der Schneidleiste ist allerdings mit Nachteilen behaftet. So ist das im Messerträger mittels eines Messerliftes gehaltene Messer zunächst nur lose mit dem Messer verbunden. Der Messerträger wird in seine untere Endstellung abgesenkt und dann das Messer mittels des Messerliftes so weit abgesenkt, daß es auf der Schneidleiste aufliegt, wobei es sich aufgrund des Eigengewichtes und dessen unterer Keilform teilweise in die Schneidleiste eingräbt. Anschließend wird das Messer mittels Schrauben mit dem Messerträger fest verbunden. Hierbei wird das Messer senkrecht zur Schneidebene in Richtung des Messerbalkens gezogen, mit der Konsequenz, daß die in die Schneidleiste eingegrabene, harte Messerspitze Scherkräften senkrecht zur Schneidebene ausgesetzt ist. Dies kann dazu führen, daß die Messerspitze ausbricht und damit das einzusetzende Messer von vorneherein unbrauchbar wird.

Bei einem derartigen Messerwechsel kann insbesondere dann, wenn das zu schneidende Gut nicht unmittelbar auf dem Schneidtisch sondern auf einer Schneidunterlage aufliegt, nicht wie vorbeschrieben das Messer an der Schneidleiste ausgerichtet werden, da es sonst beim Schnitt die Schneidunterlage durchtrennen würde.

Die Erfindung betrifft ferner eine Maschine zum Schneiden von Papier, Pappe oder dergleichen, insbesondere in Form von Stapeln, mit einem Traggestell mit einem darin gelagerten, anheb- und absenkbaren Messerträger, mit dem lösbar ein Messer verbunden ist, sowie mit einem Tisch zur Aufnahme des Schneidgutes und einer Justiervorrichtung zum Justieren des Messers beim Messerwechsel.

Eine derartige Maschine mit Messerwechselvorrichtung, die eine Justiervorrichtung aufweist, ist aus der DE 195 16 347 A1 bekannt. Dort ist die Justiervorrichtung am Messerträger vorgesehen, womit die Ausrichtung des Messers nicht bezüglich der Schneidleiste erfolgt, sondern bezüglich des Messerträgers. Toleranzen zwischen Messer und Messerträger, insbesondere aufgrund der Anordnung der Justiervorrichtung im Messerträger bedingen, daß die Voreinstellung des Messers recht ungenau ist und der Vorgang der Justierung primär auf die Exzenter in den Drehpunkten des Messerträgers bzw. die zentrale Tiefenverstellung des Pleuels verlagert wird. Den bei dieser Maschine vorgesehenen, am Messerträger schwenkbar befestigten Hebeln kommt im wesentlichen die Aufgabe zu, das Messer in seiner Montageposition zu halten.

Aus der DE-OS 2 039 128 ist eine Vorrichtung zum Einstellen des Messers an Schneidmaschinen für Papier, Pappe und dergleichen bekannt, bei denen das Messer am Messerbalken mit durch Durchgangsbohrungen hindurchgreifende Messerbefestigungsschrauben befestigt wird und der Messerabschliff durch Verstellen der Länge der Zugstange des Messerbalkens ausgleichbar ist. Zum Einstellen des Messers sind auf dem Schneidtisch oder Maschinenkörper beispielsweise abnehmbare Lehren vorgesehen, deren Auflageplatten die erforderliche Höhenlage der Messerschneide andeuten. Alternativ wird vorgeschlagen, zur Andeutung der erforderlichen Höhenlage der Messerschneide Lichtmarken zu verwenden, die insbesondere am abgesenkten Preßbalken die einzustellende.Höhenlage der Messerschneide andeuten.

Es ist Aufgabe der vorliegenden Erfindung, ein Verfahren zum Justieren des Messers beim Messerwechsel in seiner abgesenkten Stellung anzugeben, mittels dessen auf einfache Art und Weise eine exakte Justierung des Messers möglich ist. Zudem soll eine Schneidmaschine angegeben werden, bei der mit einfachen baulichen Mitteln die exakte Justierung des Messers in der optimalen Bezugsebene, der Auflageebene des Schneidguts, gewährleistet ist.

Gelöst wird diese Aufgabe durch ein Verfahren der eingangs genannten Art, das gekennzeichnet ist durch folgende weitere Verfahrensschritte:
a. aus dem Schneidtisch wird die Schneidleiste entfernt,
b. das Stützteil wird aus einer unwirksamen Stellung in eine wirksame Stellung zum Justieren des Messers verfahren,
c. der das Messer lose in dessen angehobener Stellung aufnehmende Messerträger wird in die untere Endstellung abgesenkt,
d. das Messer wird auf das in wirksamer Stellung befindliche Stützteil abgesenkt und in dieser Stellung mit dem Messerträger fest verbunden,
e. der Messerträger wird angehoben,
f. das Stützteil wird in die unwirksame Stellung verfahren,
g. die Schneidleiste wird in den Schneidtisch eingesetzt.

Ein wesentliches Merkmal des erfindungsgemäßen Verfahrens ist darin zu sehen, daß beim Messerwechsel die Schneidleiste vom Schneidtisch entfernt wird und statt dessen mindestens ein Stützteil in eine Wirkstellung verbracht wird, das in dieser Position der Lagerung des Messers in seiner Justageposition dient. Das Messer wird dabei zweckmäßig im Bereich voneinander entfernter Stellen, insbesondere im Bereich der beiden Messerenden unterstützt, wobei in diesem Fall mindestens zwei Stützteile erforderlich sind. Damit diese Stützteile wirksam werden können, ist es nur erforderlich, sie aus einem Bereich, in dem das Messer im Betrieb nicht wirksam ist, in den Bereich, den das Messer in seiner im Betrieb abgesenkten Stellung einnimmt, zu verfahren. Das Stützteil bzw. die Stützteile können horizontal eingefahren werden. Als bevorzugt wird es allerdings angesehen, wenn das Stützteil bzw. die Stützteile in ihrer nicht wirksamen Stelle, bezogen auf ihre der Aufnahme des Messers dienenden Fläche, unterhalb der Auflageebene des Schneidgutes angeordnet sind und in ihrer wirksamen Stellung im wesentlichen in der Ebene dieses Schneidgutes. Dies kann besonders einfach dadurch bewerkstelligt werden, daß das Stützteil bzw. die Stützteile schwenkbar im Schneidtisch gelagert sind. Nachdem das Messer durch die Auflage auf dem Stützteil justiert und anschließend mit dem Messerträger fest verbunden und der Messerträger angehoben wurde, kann die Schneidleiste wieder in den Schneidtisch eingesetzt werden. Sofern die Stützteile sich in ihrer wirksamen Stellung dort befinden, wobei üblicherweise die Schneidleiste im Schneidtisch positioniert ist, erfolgt selbstverständlich erst dann die Montage der Schneidleiste, wenn das Stützteil bzw. die Stützteile wieder in ihre unwirksame Stellung zurückverfahren wurden.

Gemäß einer bevorzugten Verfahrensfolge ist vorgesehen, daß die Verfahrensschritte in der Abfolge a bis g erfolgen. Es ist gleichfalls denkbar, daß die Verfahrensschritte a bis c in beliebiger Folge vor dem Verfahrensschritt d erfolgen. Auch können die Verfahrensschritte f und g in beliebiger Folge vor dem Verfahrensschritt e erfolgen.

Gemäß einer bevorzugten Weiterbildung des erfindungsgemäßen Verfahrens ist vorgesehen, daß beim Entfernen der Schneidleiste aus dem Schneidtisch das Stützteil angehoben und beim Einsetzen der Schneidleiste in den Schneidtisch das Stützteil abgesenkt wird. Die Bewegung des Entfernens bzw. Einsetzens der Schneidleiste ist somit mit dem Überführen des Stützteiles bzw. der Stützteile in deren wirksame bzw. nicht wirksame Stellung gekoppelt.

Um das Messer in unterschiedlichen Höhen, beispielsweise bezüglich einer Schneidunterlage justieren zu können, ist vorgesehen, daß die Lagerung des schwenkbaren Stützteiles exzentrisch verstellbar ist.

Die eingangs genannte erfindungsgemäße Maschine zum Schneiden von Papier, Pappe oder dergleichen mit der Messerwechselvorrichtung ist erfindungsgemäß dadurch gekennzeichnet, daß die Justiervorrichtung im Tisch gelagert und zwischen einer unwirksamen Stellung und einer wirksamen Stellung verfahrbar ist, wobei die Justiervorrichtung mindestens ein Stützteil aufweist, dessen Auflagefläche für das Messer in der wirksamen Stellung des Stützteils in der Auflageebene des Schneidgutes im Bereich der Schneidkante des beim Messerwechsel abgesenkten Messers, und deren Auflagefläche in der unwirksamen Stellung unterhalb der Auflageebene des Schneidgutes oder außerhalb des abgesenkten Messers angeordnet ist. Das Stützteil bzw. die Stützteile können auf unterschiedlichste Art und Weise bewegt werden, insbesondere pneumatisch, hydraulisch, elektrisch oder aber auch mechanisch. Insbesondere unter dem letztgenannten Aspekt ist es denkbar, die Bewegung der Schneidleiste beim Einsetzen in den Tisch bzw. beim Herausnehmen aus dem Tisch zu nutzen, um eine Mechanik zu betätigen, die das Stützteil bzw. die Stützteile bewegt, um diese in die wirksame bzw. nicht wirksame Stellung zu überführen. Bevorzugt sind mehrere Stützteile vorgesehen, wobei das abgesetzte Messer beim Messerwechsel die Stützteile außerhalb des Schneidbereiches des Messers kontaktiert. Sollte ungeachtet des Umstandes, daß die Stützteile aus hartem Material bestehen, beispielsweise aus Metall, Keramik, hartem Kunststoff oder dergleichen, eine Beschädigung des harten Messers beim Justieren erfolgen, so wäre dies nicht von übermäßig großem Nachteil, da die Beschädigung nur einen Bereich des Messers betrifft, mit dem nicht geschnitten wird. Es ist insbesondere vorgesehen, daß die Justiervorrichtung zwei Stützteile aufweist, die in der Verlängerung der in den Tisch eingesetzten Schneidleiste angeordnet sind. Zweckmäßig ist das jeweilige Stützteil im Tisch schwenkbar gelagert. Dies derart, daß die Auflagefläche des Stützteiles für das Messer in der wirksamen Stellung des Stützteiles eine Ebene mit der Auflagefläche des Schneidgutes bildet. Die Auflagefläche der Ebene kann dabei durch die Oberfläche des Tisches gebildet sein; es ist aber gleichfalls denkbar, daß bei Verwendung einer Schneidunterlage deren das Schneidgut aufnehmende Oberfläche eine Ebene mit der Auflagefläche des Stützteiles bildet.

Das Stützteil selbst muß nicht grundsätzlich hart ausgebildet sein. Es reicht aus, wenn es eine harte Einlage aufweist, die entsprechend den Anforderungen ausgetauscht werden kann.

Wie bereits vorstehend angedeutet, wird es als besonders vorteilhaft angesehen, wenn die Stützteile mittels einer Kinematik synchron verschwenkbar sind. Es ist insbesondere daran gedacht, daß bei in den Tisch eingesetzter Schneidleiste von dieser ein Bauteil der Kinematik in eine Wirkstellung überführt ist, und sich die Stützelemente in ihrer nicht wirksamen Stellung befinden. Vorzugsweise spannen Federmittel die Stützelemente in ihre wirksame Stellung vor und es weist die Kinematik Zugmittel auf, die die Stützelemente entgegen der Kraft der Federmittel beaufschlagen. Bei dem Zugmittel kann es sich beispielsweise um einen Bowdenzug handeln.

Weitere Merkmale der Erfindung sind in der Beschreibung der Figuren und in den Figuren selbst dargestellt, wobei bemerkt wird, daß alle Einzelmerkmale und alle Kombinationen von Einzelmerkmalen erfindungswesentlich sind.

In den Figuren ist die Erfindung anhand zweier nach dem Verfahren arbeitenden Ausführungsformen einer Schneidmaschine mit Justiervorrichtung beispielsweise dargestellt, ohne auf diese Ausführungsformen beschränkt zu sein. Es zeigt in schematischer Darstellung:
- Figur 1: die Schneidmaschine in einer Frontansicht bei angehobenem Messerträger und im Messerlift gehaltenem, abgesenktem Messer,
- Figur 2: die Schneidemaschine gemäß Darstellung in Figur 1, bei relativ zum Messerträger angehobenem Messer, in der abgesenkten Stellung des Messerträgers (Justagestellung),
- Figur 3: einen senkrechten Schnitt durch die Schneidmaschine in der Justagestellung des Schneidmessers,
- Figur 4: eine Detailansicht "a" gemäß Figur 3 mit in wirksamer Stellung gezeigtem Stützteil, das gemäß der ersten Ausführungsform mittels eines Kraftzylinders verschwenkbar ist,
- Figur 5: die Detaildarstellung gemäß Figur 4, veranschaulicht für das in unwirksamer Stellung befindliche Stützteil,
- Figur 6: eine Detailansicht gemäß Figur 4 bei in wirksamer Stellung befindlichem Stützteil, das gemäß der zweiten Ausführungsform mechanisch verschwenkbar ist und
- Figur 7: die Detaildarstellung gemäß Figur 6, bei in unwirksamer Stellung befindlichem Stützteil,
wobei die Figuren 6 und 7 aus Vereinfachungsgründen die in zwei unterschiedlichen Ebenen wirksamen Bereiche von Schwenkhebel und Stützteil der Justiervorrichtung in der jeweiligen Figur veranschaulichen, so daß man sich den in diesen Figuren gezeigten Bowdenzug umgelenkt vorstellen muß.

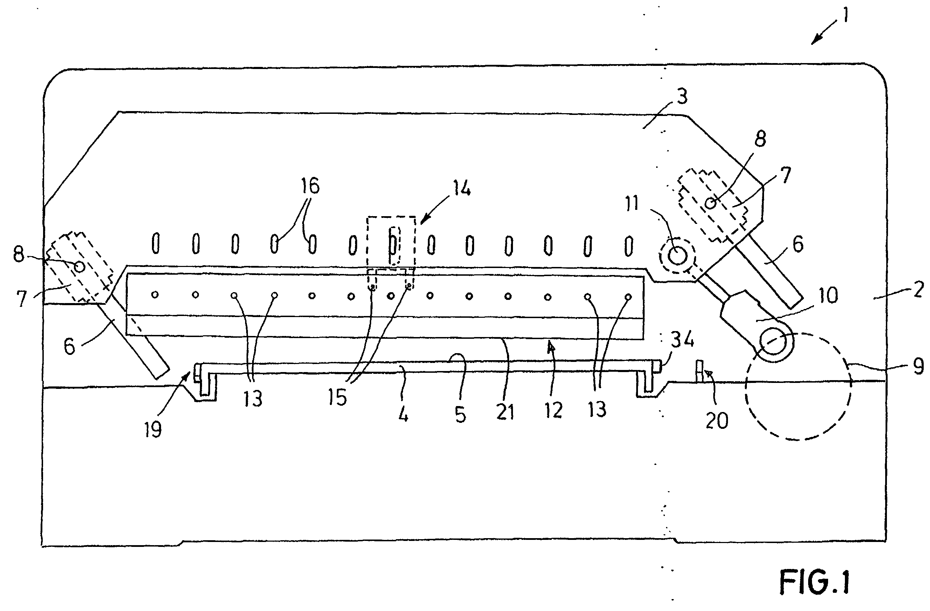

Figur 1 zeigt eine Schneidmaschine 1 der eingangs beschriebenen Art, mittels derer ein Schwingschnitt ausgeführt werden kann. Die Maschine weist ein Traggestell 2 auf, in dem ein Messerträger 3 verfahrbar gelagert ist. Vom Traggestell 2 wird ein Tisch 4 aufgenommen, der der Aufnahme des nicht gezeigten, zu schneidenden bzw. geschnittenen Gutes dient. Die Tischoberfläche, auf der das Gut ruht, ist mit der Bezugsziffer 5 bezeichnet. Unter einer Schrägen zur Vertikalen sind im Traggestell 2 oberhalb und seitlich des Tisches 4 zwei Führungsschienen 6 gelagert, wobei jede Führungsschiene 6 einen Führungsschlitten 7 aufnimmt. Dieser ist mit einem Lagerbolzen 8 zur schwenkbaren Aufnahme des Messerträgers 3 versehen. Im Traggestell 2 ist ferner eine vereinfacht mittels eines strichpunktierten Kreises dargestellte Kurbel 9 gelagert, die elektromotorisch antreibbar ist. Mit der Kurbel 9 ist ein Pleuel 10 verbunden, das schwenkbar mit einem Lagerbolzen 11 des Messerträgers 3 verbunden ist. Diese kinematische Ausbildung führt dazu, daß beim Bewegen der Kurbel 9 über einen Vollkreis der Messerträger 3 aus der vollständig angehobenen Stellung im Schwingschnitt abgesenkt und wieder vollständig angehoben wird.

Der Messerträger 3 dient der Aufnahme des Schneidmessers 12. Dieses ist über seine Länge mit einer Vielzahl von Gewindebohrungen 13 versehen, im Bereich derer das Messer 12 mit dem Messerträger 3 verbunden wird. Hierzu ist der Messerträger 3 entsprechend der Anzahl der Gewindebohrungen 13 im Messer 12 mit im wesentlich vertikal orientierten Langlöchern versehen, die der Aufnahme von in die Gewindebohrungen 13 des Messers 12 einschraubbaren, nicht gezeigten Schraubbolzen dienen.

Figur 1 veranschaulicht die Schneidmaschine 1 bei vollständig angehobenem Messerträger beim Messerwechsel. In den Messerträger 3 ist ein aus dem Stand der Technik bekannter Messerlift 14 integriert, wobei zwei Vorsprünge 15 des heb- und senkbaren Teiles des Messerliftes 14 in Lochausnehmungen des Schneidmessers 12 eingehängt sind. Gezeigt ist bei vollständig abgesenktem Teil des Messerliftes das in dieses eingesetzte Schneidmesser 12. Anschließend wird das absenk- und anhebbare Teil des Messerliftes 14 in seine vollständig angehobene Stellung überführt, womit das Messer 12 in seine maximal angehobene Position bezüglich des Messerträgers 3 bewegt wird. In dieser Stellung wird eine lose Verbindung zwischen Messer 12 und Messerträger 3 herbeigeführt, so daß das Messer 12 nicht unbeabsichtigt aus dem Messerträger 3 fallen kann. Erreicht wird dies, indem mindestens im Bereich zweier Langlöcher 16 und der mit diesen korrespondierenden Gewindebohrungen 13 die Gewindebolzen teilweise in das Messer eingeschraubt werden. Das Messer 12 ist damit entsprechend der Vorgabe der Langlöcher 16 nach wie vor relativ zum Messerträger 3 und überdies wegen der nur losen Befestigung senkrecht zur Schneidebene des Messers beweglich.

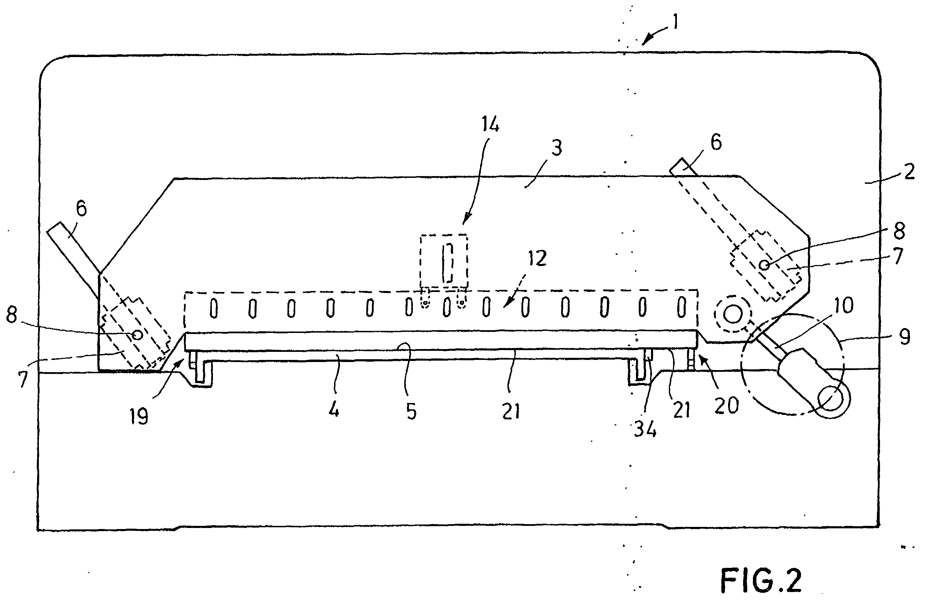

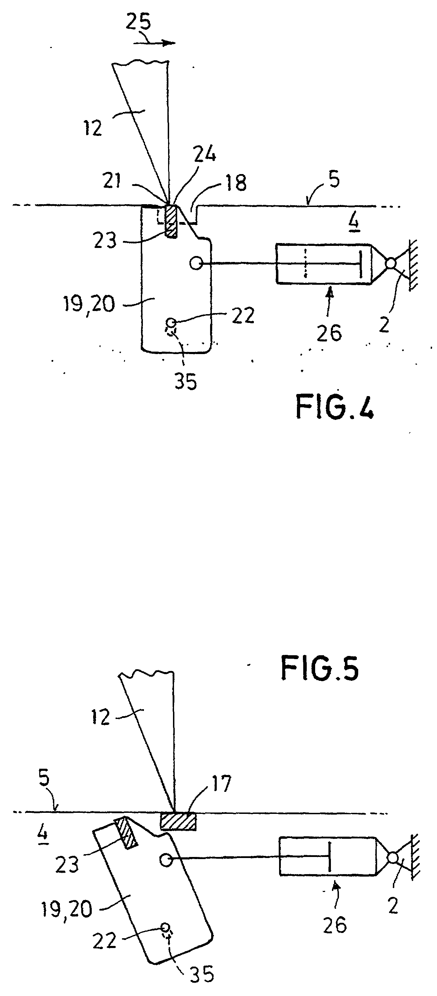

Die Justage des Messers 12 beim Messerwechsel erfolgt, ausgehend von der zuvor geschilderten, bezüglich des Messerträgers 3 angehobenen Messerposition, indem, wie es in Figur 2 gezeigt ist, der Messerträger 3 in seine vollständig abgesenkte Stellung bewegt und in dieser angehalten wird. Dann wird mittels des Messerliftes 14 das lose mit dem Messerträger 3 befestigte Messer 12 auf die Justiervorrichtung abgesenkt, nachdem die unterhalb des Schneidmessers 12 im Tisch 4 gelagerte Schneidleiste 17 aus der entsprechenden Nut 18 im Tisch 4 entfernt worden ist {siehe Figuren 4 und 5).

Wie der Darstellung der Figuren 2 bis 5 zu entnehmen ist, weist die Justiervorrichtung zwei Stützteile 19 und 20 auf, wobei das Stützteil 19 unterhalb des Messers 13 in unmittelbarer Nähe des Tisches 4 auf der dem Pleuel 10 abgewandten Seite des Tisches und das Stützteil 20 auf der dem Pleuel 10 zugewandten Seite des Tisches 4, in Abstand zu diesem, angeordnet sind, so daß die Stützteile 19 und 20, bezogen auf die Länge des Messers 12, im Bereich der Messerenden in Kontakt mit der Schneidkante 21 des Messers 12 bringbar sind.

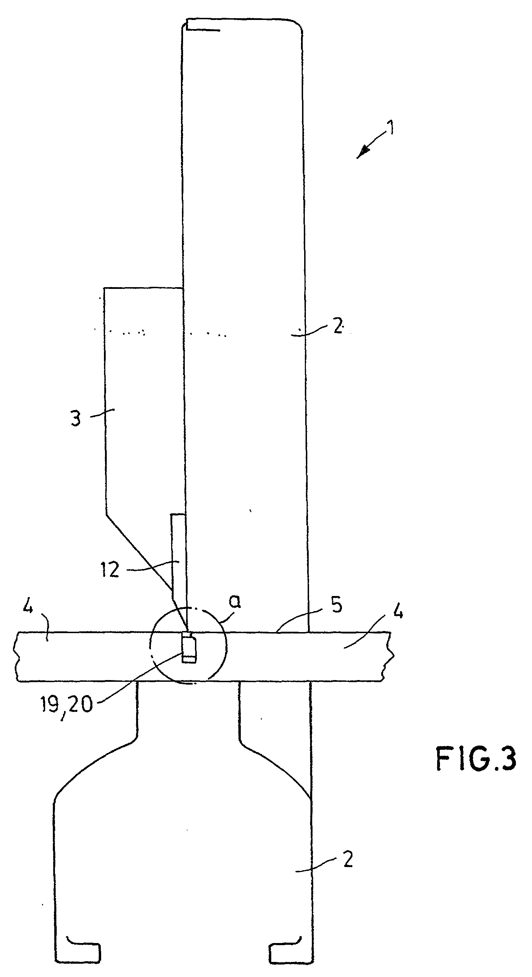

Wie insbesondere der Darstellung der Figuren 3 bis 5 zu entnehmen ist, ist das jeweilige Stützteil 19 bzw. 20 im Traggestell 2 um die Achse 22 schwenkbar gelagert. Das jeweilige Stützteil ist im Bereich seines oberen Endes mit einer Nut versehen, in die eine harte Einlage 23 beispielsweise aus Metall, Keramik oder hartem Kunststoff eingesetzt ist. Die der Schneidkante 21 des Messers 12 zugewandte Oberfläche 24 der Einlage 23 ist in der wirksamen Stellung des Stützteiles 19 bzw. 20, wie sie in Figur 4 gezeigt ist, so angeordnet, daß sie eine Ebene mit der Tischoberfläche 5 bildet.

Zum Justieren des Messers 12 wird dieses auf die Einlagen 23 der beiden Stützteile 19 und 20 abgesenkt, wobei diese abgesenkte Stellung in den Figuren 3 und 4 gezeigt ist. In dieser Position wird das Messer 12 fest mit dem Messerträger 3 verbunden, indem alle vorhandenen Langlöcher 16 genutzt und in derem Bereich die Schraubverbindungen herbeigeführt werden. Hierbei wird das Messer 12 auch geringfügig in Richtung des Messerträgers 3 bewegt, wie es in Figur 4 durch den Pfeil 25 veranschaulicht ist. Nachdem das Messer 12 fest mit dem Messerträger 3 verbunden ist, wird der Messerträger in die in Figur 1 gezeigte angehobene Stellung überführt. Nach dieser Voreinstellung des Messers mittels der Justiervorrichtung kann die Detailverstellung des Messers über Exzenter in den Drehpunkten des Messerträgers oder über eine zentrale Tiefenverstellung des Pleuels erfolgen.

Nachdem das mit dem Messerträger 3 befestigte Messer 12 angehoben ist, wird, wie in der Figur 5 veranschaulicht, das jeweilige Stützteil 19 bzw. 20 mittels eines an diesem gelenkig angreifenden Stellzylinders 26 verschwenkt, der im Traggestell 2 gelagert ist. Hierbei kann es sich beispielsweise um einen Pneumatikzylinder handeln, der zwischen zwei Endstellungen wirksam ist und damit die wirksame Stellung des jeweiligen Stützteiles 19 bzw. 20, wie in Figur 4 gezeigt, bzw. die nicht wirksame Stellung des jeweiligen Stützteiles, wie in Figur 5 gezeigt, vorgibt. Figur 5 zeigt das aus dem Bereich der Nut 18 im Tisch 4 verschwenkte Stützteil 19 bzw. 20, wobei in die Nut 18 wieder die Schneidleiste 17 eingesetzt ist. Beim Schnitt kontaktiert, wie in Figur 5 gezeigt, das Schneidmesser 12 mit seiner Schneidkante 21 die Schneidleiste 17 und dringt, um den Schnitt des untersten Bogens des zu schneidenden Gutes zu gewährleisten, teilweise in die Schneidleiste 17 ein.

Bei der in den Figuren 4 und 5 beschriebenen Ausführungsform erfolgt das Einführen bzw. Herausnehmen der Schneidleiste 17 in die Nut 18 unabhängig vom Verschwenken des jeweiligen Stützteiles in die nicht wirksame bzw. wirksame Stellung.

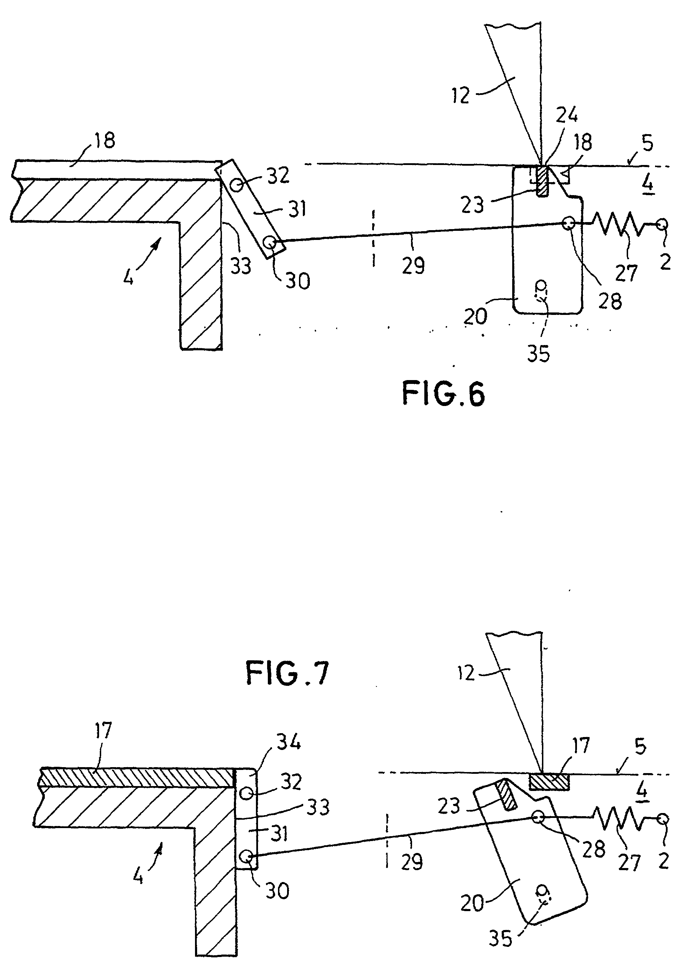

Die Ausführungsform nach den Figuren 6 und 7 veranschaulicht die Koppelung der Bewegung beim Einsetzen bzw. Herausnehmen der Schneidleiste 17 mit der Schwenkbewegung des jeweiligen Stützteiles in dessen nicht wirksame bzw. wirksame Stellung. Bei dieser Ausführungsform greift eine Zugfeder 27 am jeweiligen Stützteil 19 bzw. 20 und am Traggestell 2 an. In entgegengesetzter Wirkrichtung greift am stützteilseitigen Lagerpunkt 28 der Zugfeder 27 ein Bowdenzug 29 an, dessen anderes Ende an einem Lagerpunkt 30 angreift, der im Bereich des freien Endes eines Schwenkhebels 31 angreift, der um eine Achse 32 im Tisch 4 schwenkbar gelagert ist. Der über die Achse 32 hinausstehende Abschnitt 34 des Schwenkhebels 31 besitzt die Funktion eines Anschlages für die in die Nut 18 eingesetzte Schneidleiste 17. Dieser Anschlag ist notwendig, um beim Schwingschnitt, bei dem das Messer fortwährend eine Kraftkomponente in Richtung des Pleuels 10 bzw. des Stützteiles 20 ausübt, eine Verschiebung der Schneidleiste 17 in der Nut 18 zu verhindern. Bei nicht in die Nut 18 eingesetzter Schneidleiste 17, wie dies in Figur 6 gezeigt ist, zieht die Druckfeder 27 des Stützteils 20 und das mit diesem über einen nicht gezeigten weiteren Bowdenzug verbundene andere Stützteil 19 in die wirksame Stellung. Wird die Schneidleiste 17 in die Nut 18 eingesetzt und dabei gegen den Anschlag 34 verschoben, schwenkt der Schwenkhebel 31, bis er seine Endposition an der Anschlagkante 33 des Tisches 4 erreicht hat, mit der Konsequenz, daß der Schwenkhebel 31 über den Bowdenzug 29 das Stützteil 20 und dieses über den nicht gezeigten weiteren Bowdenzug das andere Stützteil 19 entgegen der Kraft der Feder 27 und der Kraft einer gleichfalls am anderen Stützteil 19 angeordneten Zugfeder in die in Figur 7 gezeigte nicht wirksame Stellung zieht. Aus Vereinfachungsgründen sind in den Figuren 6 und 7 die in zwei unterschiedlichen Ebenen wirksamen Bereiche von Schwenkhebel 31 und Stützteil 20 in einer Zeichnung veranschaulicht. Dies bedeutet, daß man sich den in diesen Zeichnungen gezeigten Bowdenzug 29 so vorstellen muß, daß er zwischen seinen Angriffspunkten 28 und 30 umzulenken ist, was vereinfacht in den Zeichnungen mittels der strichlierten Linie angedeutet ist, die eine mehrfache Umlenkung darstellt.

Sofern das zu schneidende Gut nicht unmittelbar auf der Tischoberfläche 5, sondern auf einer Schneidunterlage liegend geschnitten werden soll, ist es erforderlich, das Schneidmesser 12 höher zu justieren. Dies kann auf einfache Art und Weise dadurch geschehen, daß, wie in den Figuren 4 bis 7 strichliert verdeutlicht, die Stützteile 19 bzw. 20 im Bereich deren Lager 22 über verstellbare exzentrische Ansätze 35 gelagert sind. Durch Verstellen dieser Exzenter kann die Oberfläche 24 der jeweiligen Einlage 23 auf ein Niveau oberhalb der Tischoberfläche 5 positioniert werden.

## Patentansprüche

1. Verfahren zum Justieren eines Messers (12) in der abgesenkten Stellung beim Messerwechsel an einer Maschine zum Schneiden von Papier, Pappe und dergleichen, wobei das Messer (12) an einem heb- und senkbaren Messerträger (3) lösbar befestigt ist, das vom Messerträger (3) gelöste Messer (12) im Messerträger (3) hebund senkbar gehalten ist, und bei abgesenktem Messerträger (3) das Messer (12) zum Justieren des Messers (12) auf mindestens ein in der Auflageebene (5) des Schneidgutes angeordnetes Stützteil (19, 20) absenkbar ist, wobei die Maschine einen Schneidtisch mit Schneidleiste (17) aufweist, **gekennzeichnet** durch folgende Verfahrensschritte:
a. aus dem Schneidtisch wird die Schneidleiste (17) entfernt,
b. das Stützteil (19, 20) wird aus einer unwirksamen Stellung in eine wirksame Stellung zum Justieren des Messers (12) verfahren,
c. der das Messer (12) lose in dessen angehobener Stellung aufnehmende Messerträger (3) wird in die untere Endstellung abgesenkt,
d. das Messer (12) wird auf das in wirksamer Stellung befindliche Stützteil (19, 20) abgesenkt und in dieser Stellung mit dem Messerträger (3) fest verbunden,
e. der Messerträger (3) wird angehoben,
f. das Stützteil (19, 20) wird in die unwirksame Stellung verfahren,
g. die Schneidleiste (17) wird in den Schneidtisch eingesetzt.

2. Verfahren nach Anspruch 1, **dadurch gekennzeichnet,** daß die Verfahrensschritte in der Abfolge a bis g erfolgen.

3. Verfahren nach Anspruch 1, **dadurch gekennzeichnet,** daß die Verfahrensschritte a bis c in beliebiger Folge vor dem ' Verfahrensschritt d erfolgen.

4. Verfahren nach Anspruch 1 oder 3, **dadurch gekenzeichnet,** daß die Verfahrensschritte f und g in beliebiger Folge nach dem Verfahrensschritt e erfolgen.

5. Verfahren nach einem der Ansprüche 1 bis 4, dadurch **gekennzeichnet,** daß beim Entfernen der Schneidleiste (17) aus dem Schneidtisch das Stützteil (19, 20) angehoben und beim Einsetzen der Schneidleiste (17) in den Schneidtisch das Stützteil (19, 20) abgesenkt wird.

6. Verfahren nach einem der Ansprüche 1 bis 5, **dadurch gekennzeichnet,** daß das Stützteil (19, 20) aus einer abgesenkten, unwirksamen Stellung in eine angehobene, wirksame Stellung zum Justieren des Messers (12) verfahren wird.

7. Maschine zum Schneiden von Papier, Pappe oder dergleichen, insbesondere in Form von Stapeln, mit einem Traggestell (2) mit einem darin gelagerten, anheb- und absenkbaren Messerträger (3), mit dem lösbar ein Messer (12) verbunden ist, sowie mit einem Tisch (4) zur Aufnahme des Schneidgutes und einer Justiervorrichtung (19, 20) zum Justieren des Messers (12) beim Messerwechsel, **dadurch gekennzeichnet,** daß die Justiervorrichtung (19, 20) im Tisch (4) gelagert und zwischen einer unwirksamen Stellung und einer wirksamen Stellung verfahrbar ist, wobei die Justiervorrichtung (19, 20) mindestens ein Stützteil aufweist, dessen Auflagefläche (24) für das Messer (12) in der wirksamen Stellung des Stützteils (19, 20) in der Auflageebene (5) des Schneidgutes im Bereich der Schneidkante (21) des beim Messerwechsel abgesenkten Messers (12) und deren Auflagefläche (24) in der unwirksamen Stellung unterhalb der Auflageebene (5) des Schneidgutes oder außerhalb des abgesenkten Messers (12) angeordnet ist.

8. Schneidmaschine nach Anspruch 7, **dadurch gekennzeichnet,** daß mehrere Stützteile (19, 20) vorgesehen sind, wobei das abgesenkte Messer (12) beim Messerwechsel die Stützteile (19, 20) außerhalb des Schneidbereiches des Messers (12) kontaktiert.

9. Schneidmaschine nach Anspruch 8, **dadurch gekenzeichnet,** daß zwei Stützteile (19, 20) vorgesehen sind, die in der Verlängerung einer in den Tisch (4) eingesetzten Schneidleiste (17) angeordnet sind.

10. Schneidmaschine nach Anspruch 9, **dadurch gekennzeichnet,** daß das jeweilige Stützteil (19, 20) im Tisch (4) schwenkbar gelagert ist.

11. Schneidmaschine nach einem der Ansprüche 7 bis 10, **dadurch gekennzeichnet,** daß das jeweilige Stützteil (19 bzw. 20) eine harte Einlage (23) zur Aufnahme des Messers (12) aufweist.

12. Schneidmaschine nach einem der Ansprüche 7 bis 11, **dadurch gekennzeichnet,** daß die Stützteile (19, 20) mittels einer Kinematik synchron verschwenkbar sind.

13. Schneidmaschine nach Anspruch 12, **dadurch gekennzeichnet,** daß bei in den Tisch (4) eingesetzter Schneidleiste (17) von dieser ein Bauteil (31) der Kinematik in eine Wirkstellung überführt ist, und sich die Stützelemente (19, 20) in ihrer nicht wirksamen Stellung befinden.

14. Schneidmaschine nach Anspruch 13, **dadurch gekennzeichnet,** daß Federmittel (27) die Stützelemente (19, 20) in ihre wirksame Stellung vorspannen und die Kinematik Zugmittel (29) aufweist, die die Stützelemente (19, 20) entgegen der Kraft der Federmittel (27) beaufschlagen.

15. Schneidemaschine nach einem der Ansprüche 10 bis 14, **dadurch gekennzeichnet,** daß das jeweilige schwenkbare Stützteil (19; 20) exzentrisch zwecks Höhenverstellung im Tisch (4) gelagert ist.

## Claims

1. Method for adjusting a blade (12) in the lowered position when changing the blade on a machine for cutting paper, card or similar, whereby the knife (12) is removably attached to a blade carrier (3) capable of being raised and lowered, the blade (12) released from the blade carrier (3) is held able to be raised and lowered in the blade carrier (3), and with the blade carrier (3) lowered, in order to adjust the blade (12), the blade (12) can be lowered onto at least one support member (19, 20) arranged in the cutting material support plane (5), whereby the machine has a cutting table with cutting strip (17), characterised by the following steps:
a. the cutting strip (17) is removed from the cutting table,
b. the support member (19, 20) is moved from an ineffective position into an effective position for adjusting the blade (12),
c. the blade carrier (3) loosely carrying the blade (12) in its raised position is lowered into the lower end position,
d. the blade (12) is lowered onto the support member (19, 20) situated in the effective position and in this position firmly attached to the blade carrier (3),
e. the blade carrier (3) is raised,
f. the support member (19, 20) is moved into the ineffective position,
g. the cutting strip (17) is placed in the cutting table.

2. Method according to Claim 1, characterised in that the steps take place in the sequence a to g.

3. Method according to Claim 1, characterised in that the steps a to c are carried out in any order before step d.

4. Method according to Claim 1 or 3, characterised in that the steps f and g are carried out in any order after step e.

5. Method according to one of the claims 1 to 4, characterised in that on removal of the cutting strip (17) from the cutting table, the support member (19, 20) is raised and on placement of the cutting strip (17) in the cutting table, the support member (19, 20) is lowered.

6. Method according to one of the claims 1 to 5, characterised in that the support member (19, 20) is moved from a lowered, ineffective position into a raised, effective position for adjusting the blade (12).

7. Machine for cutting paper, card or similar, particularly in the form of piles, having a support frame (2) with, mounted thereon, a blade carrier (3) capable of being raised and lowered, to which a blade (12) is removably attached, and with a table (4) for supporting the cutting material and an adjustment device (19, 20) for adjusting the blade (12) when changing the blade, characterised in that the adjustment device (19, 20) is mounted in the table (4) and is movable between an ineffective position and an effective position, whereby the adjustment device (19, 20) has at least one support member whose support surface (24) for the blade (12) is arranged in the effective position of the support member (19, 20) in the cutting material support plane (5) in the region of the cutting edge (21) of the blade (12) lowered for blade changing and whose support surface (24) in the ineffective position is arranged below the cutting material support plane (5) or beyond the lowered blade (12).

8. Cutting machine according to Claim 7, characterised in that a plurality of support members (19, 20) is provided, whereby on blade changing the lowered blade (12) contacts the support members (19, 20) outside the cutting range of the blade (12).

9. Cutting machine according to Claim 8, characterised in that two support members (19, 20) are provided, arranged in the extension of a cutting strip (17) set into the table (4).

10. Cutting machine according to Claim 9, characterised in that the respective support member (19, 20) is rotatably mounted in the table (4).

11. Cutting machine according to one of the claims 7 to 10, characterised in that the respective support member (19 or 20) has a hard inlay (23) for supporting the blade (12).

12. Cutting machine according to one of the claims 7 to 11, characterised in that the support members (19, 20) are rotatable synchronously by means of a mechanism.

13. Cutting machine according to Claim 12, characterised in that with the cutting strip (17) inserted into the table (4), a component (31) of the mechanism is transferred by the cutting strip (17) into an effective position and the support members (19, 20) are situated in their ineffective position.

14. Cutting machine according to Claim 13, characterised in that sprung means (27) pre-tension the support members (19, 20) in their effective position and the mechanism has traction means (29) that impinge on the support members (19, 20) against the force of the sprung means (27).

15. Cutting machine according to one of the claims 10 to 14, characterised in that the respective rotatable support member (19, 20) is mounted eccentrically for the purpose of height adjustment in the table (4).

## Revendications

1. Procédé pour régler la position d'une lame (12), en position abaissée, lors du changement de lame dans une machine servant à couper du papier, du carton et similaires, dans laquelle :
- la lame (12) est montée amovible sur un porte-lame (3) pouvant monter et descendre, et la lame (12) séparée du porte-lame (3) reste maintenue en pouvant monter et descendre dans le porte-lame (3),
- quand le porte-lame (3) est en bas, la lame (12), pour son ajustage, peut être descendue sur au moins une pièce de soutien (19, 20) située dans le plan d'application (5) du produit à couper, la machine comportant une table de coupe équipée d'une réglette de coupe (17)
caractérisé par les étapes suivantes :
a) on sépare la réglette de coupe (17) de la table de coupe,
b) pour ajuster la lame (12) on fait passer la pièce de soutien (19, 20) d'une position inactive à une position active,
c) le porte-lame (3) accueillant la lame (12) lâche et en position haute, est abaissé à sa position basse extrême,
d) la lame (12) est descendue sur la pièce de soutien (19, 20) occupant sa position active, et est rendue solidaire du porte-lame (3) dans cette position,
e) le porte-lame (3) est remonté,
f) la pièce de soutien (19, 20) est amenée à sa position inactive, et
g) la réglette de coupe (17) est insérée dans la table de coupe.

2. Procédé selon la revendication 1,
caractérisé en ce que
les étapes se déroulent dans l'ordre de a) à g).

3. Procédé selon la revendication 1,
caractérisé en ce que
les étapes a) à c) s'effectuent dans un ordre quelconque, avant l'étape d).

4. Procédé selon l'une quelconque des revendications 1 à 3,
caractérisé en ce que
les étapes f) et g) s'effectuent dans n'importe quel ordre, après l'étape e).

5. Procédé selon l'une quelconque des revendications 1 à 4,
caractérisé en ce que
pour retirer la réglette (17) de la table de coupe, on fait monter la pièce de soutien (19, 20) et pour remettre la réglette (17) dans la table de coupe, on fait descendre la pièce de soutien (19, 20).

6. Procédé selon l'une quelconque des revendications 1 à 5,
caractérisé en ce que
la pièce de soutien (19, 20) passe d'une position abaissée, inactive, à une position élevée, active, pour procéder à l'ajustage de la lame (12).

7. Machine pour couper du papier, du carton ou similaires, notamment sous forme de piles, comprenant un bâti (2) dans lequel est monté en pouvant monter et descendre, un porte-lame (3) auquel est reliée de manière amovible une lame (12), ainsi qu'une table (4) pour recevoir le produit à couper et un dispositif d'ajustage (19, 20) pour régler la position de la lame (12) quand on échange celle-ci.,
caractérisée en ce que
le dispositif d'ajustage (19, 20) est monté dans la table (4) en pouvant se déplacer entre une position inactive et une position active, et le dispositif d'ajustage (19, 20) comporte au moins une pièce de soutien dont la portée (24) accueillant la lame (12) se trouve, quand la pièce de soutien (19, 20) est en position active, dans le plan d'application (5) du produit à couper, près de l'arête de coupe (21) de la lame (12) abaissée pour son changement, tandis que la portée (24), quand la pièce de soutien est en position inactive, se trouve en dessous du plan d'application (5) du produit à couper ou à l'extérieur de la lame (12) descendue.

8. Machine de coupe selon la revendication 7,
caractérisée en ce que
plusieurs pièces de soutien (19, 20) sont prévues et la lame (12) quand elle est descendue pour être échangée, est en contact avec les pièces de soutien (19, 20) en dehors de la zone de coupe de la lame (12).

9. Machine de coupe selon la revendication 8,
caractérisée en ce qu'
il est prévu deux pièces de soutien (19, 20), disposées dans le prolongement d'une réglette de coupe (17) insérée dans la table (4).

10. Machine de coupe selon la revendication 9,
caractérisée en ce que
chaque pièce de soutien (19, 20) est montée basculante dans la table (4).

11. Machine de coupe selon l'une quelconque des revendications 7 à 10,
caractérisée en ce que
chaque pièce de soutien (19, 20) comporte un insert (23) pour accueillir la lame (12).

12. Machine de coupe selon l'une quelconque des revendications 7 à 11,
caractérisée en ce que
les pièces de soutien (19, 20) peuvent, par l'action d'un dispositif cinématique, basculer en synchronisme.

13. Machine de coupe selon la revendication 12,
caractérisée en ce que
quand la réglette de coupe (17) est insérée dans la table (4), elle a pour effet d'amener un composant (31) du dispositif cinématique en position active, tandis que les pièces de soutien (19, 20) occupent leurs positions inactives.

14. Machine de coupe selon la revendication 13,
caractérisée en ce que
des moyens élastiques (27) précontraignent les pièces de soutien (19, 20) dans leur position active et le dispositif cinématique présente des moyens de traction (29) agissant sur les pièces de soutien (19, 20) contre la force des moyens élastiques (27).

15. Machine de coupe selon l'une quelconque des revendications 10 à 14,
caractérisée en ce que
chaque pièce de soutien basculante (19, 20) est montée dans la table (4) par un excentrique permettant son réglage en hauteur.
